# EUROPÄISCHE PATENTSCHRIFT

(11) **EP 3 000 687 B1**
(45) Veröffentlichungstag und Bekanntmachung des Hinweises auf die Patenterteilung: **14.12.2016**
(21) Anmeldenummer: 15002713.4
(22) Anmeldetag: 18.09.2015
(51) Int. Cl.: B61D 39/00, B60J 7/06

(54) **VERDECKGESTELL FÜR EINEN PLANENAUFBAU EINES TRANSPORTFAHRZEUGS**
ROOF FRAME FOR A CANVAS COVER OF A TRANSPORT VEHICLE
BERCEAU DE COUVERTURE POUR UN MONTAGE DE SUPERSTRUCTURE D'UN VEHICULE DE TRANSPORT

(30) Priorität: 19.09.2014 DE 202014007492 U
(43) Veröffentlichungstag der Anmeldung: 30.03.2016
(73) Patentinhaber: European Trailer Systems GmbH, 47441 Moers (DE)
(72) Erfinder: Arens, Robert, 45899 Gelsenkirchen (DE); Kemmerling, Karl, 42719 Solingen (DE)
(74) Vertreter: Sparing, Rolf Klaus

(56) Entgegenhaltungen:
- EP-A1- 1 331 153
- EP-A1- 1 623 935
- WO-A1-2012/000419

## Beschreibung

Die Erfindung betrifft ein Verdeckgestell für einen Planenaufbau eines Transportfahrzeugs.

Aus der Praxis sind als Bahnwaggon ausgebildete Transportfahrzeuge mit einem Planenaufbau bekannt, die ein Verdeckgestell mit einer Mehrzahl entlang einer seitlichen Führung verlagerbarer Schlitten aufweisen, wobei an jedem Schlitten ein U-förmiger starrer Bügel angeordnet ist, und weiter beiderseits des starren Bügels jeweils ein oder zwei U-förmige Schwenkbügel angeordnet sind, die bei geschlossenem Planenaufbau einen größeren Winkel zur Vertikalen einnehmen als bei geöffnetem Planenaufbau und deren Länge so ausgewählt ist, dass bei geschlossenem Planenaufbau die Basis der U-förmigen Schwenkbügel mit der Basis des starren U-förmigen Bügels in einer die Dachebene des Planenaufbaus ausbildenden Ebene liegen. Nachteilig bei den bekannten Verdeckgestellen ist der Umstand, dass die Schlitten relativ nah beieinander angeordnet sein müssen, um eine Plane über ihre Länge abzustützen. Darüber hinaus schließen im Bereich der Seiten des Planenaufbaus die einander zugekehrten Schwenkbügel benachbarter Schlitten einen dreieckigen Bereich, dessen Basis die beiden Schlitten verbindet, ein, in den die sich faltende Plane beim Zusammenschieben des Verdeckgestells leicht hinein geraten und eingeklemmt werden kann und sich mit der Ladung oder die Ladung sichernden Teilen verhakt.

Aus der Praxis sind ferner als Bahnwaggon ausgebildete Transportfahrzeuge mit einem Planenaufbau bekannt, deren Verdeckgestell eine Mehrzahl entlang einer seitlichen Führung verlagerbare Schlitten aufweist, wobei an den Schlitten bezüglich einer längshalbierenden Ebene des Planenaufbaus gegenüberliegend starre U-förmige Bügel angeordnet sind. An den Bügeln ist im vertikalen Abstand zu den Schlitten in einer Höhe von etwa einem Drittel bis vierzig Prozent der Höhe des Planenaufbaus ein Lenker angeschlossen, der mit einem Lenker eines bezüglich einer gemeinsamen Führung benachbarten Schlittens eine Kopplung aufweist. Im Bereich der Kopplung ist ein Hubbügel angeordnet, der U-förmig ausgebildet ist und dessen Basis mit der Plane verbunden ist. Der Schenkel des Hubbügels durchsetzt hierbei die Kopplung und weist einen vertikal von der Kopplung beabstandeten Anschlag auf, sodass beim Zusammenschieben des Verdeckgestells zunächst der Schenkel des Bügels durch die Kopplung fällt, bis der Anschlag den Hubbügel auf der Kopplung hält und der Hubbügel die Plane anhebt. Hierdurch wird erreicht, dass trotz des flachen Anstellwinkels der Lenker die Plane nicht um einen größeren Betrag bzw. Hub angehoben wird. Nachteilig bei der bekannten Lösung ist jedoch der Umstand, dass die benachbarten Schlitten sehr nahe beieinander angeordnet sein müssen, um der Plane ausreichend Halt zu geben. Ferner neigen die durch den starren U-förmigen Bügel miteinander verbundenen Schlitten dazu, wenn sie zusammengeschoben oder auseinander gezogen werden, zu verkanten. Weiterhin führt die recht hohe Anbringung des Hubbügels dazu, dass dessen Schenkel den unteren Bereich zwischen benachbarten starren Bügeln und Schlitten nicht oder nicht zureichend abdecken, so dass die Plane beim Zusammenfalten immer noch mit Ladung oder ladungssichernden Teilen verhaken kann.

US 5 538 313 A beschreibt einen Planenaufbau mit einem Verdeckgestell für ein Transportfahrzeug, bei dem eine Mehrzahl entlang einer seitlichen Führung verlagerbarer Schlitten jeweils einen starren U-förmigen Bügel tragen, der den Schlitten mit einem bezüglich einer längshalbierenden Ebene gegenüberliegenden Schlitten verbindet, wobei an dem Schlitten weiter jeweils beiderseits des U-förmigen Bügels ein Lenker angeordnet ist, dessen Länge mehr als die halbe Höhe des Schenkels des U-förmigen Schlittens ausmacht und die in einem spitzen Winkel miteinander verbunden sind. Jeweils an bezüglich einer längshalbierenden Ebene gegenüberliegenden Bereichen der Verbindung zweier Lenker ist ein U-förmiger Bügel mit derselben Basis wie der starre U-förmige Bügel und verkürzten Schenkeln angeschlossen, der beim Zusammenschieben des Verdeckgestells die Plane anhebt. Nachteilig ist auch hier, dass der Abstand der Schlitten nicht sehr groß werden kann, damit die Plane zwischen den benachbarten Basen der starren U-förmigen Bügel und des kurzen U-förmigen Bügels nicht hindurchfallen kann. Ferner besteht auch hier die Gefahr, dass die Plane sich in dem zwischen den Lenkern und der Führung aufgespannten Dreieck mit Ladung und ladungssichernden Teilen verhakt.

US 2007/0085369 A1 beschreibt ein Transportfahrzeug mit einem Planenaufbau, dessen Verdeckgestell eine Mehrzahl entlang einer seitlichen Führung verlagerbarer Schlitten umfasst. An jedem Schlitten ist ein U-förmiger Bügel angeschlossen, der den Schlitten mit einem bezüglich einer langshalbierenden Ebene gegenüberliegenden Schlitten koppelt, und dessen Basis mit der Plane verbunden ist, während die Schenkel des starren Bügels die Höhe des Planenaufbaus definieren. Oberhalb der mittleren Höhe des Planenaufbaus ist an den Schenkeln des starren U-förmigen Bügels jeweils ein Schwenkbügel angeordnet, dessen Höhe so dimensioniert ist, dass bei geschlossenem Planenaufbau die Basis des Schwenkbügels in einer Ebene mit der Basis des starren Bügels liegt. Die Schwenkbügel stützen die Plane zusätzlich ab. An den Schlitten sind jeweils zumindest zwei Drittel der Höhe des Planenaufbaus ausmachenden Lenkers angelenkt, die in einem Lager eines Schenkels eines kurzen U-förmigen Bügels paarweise gelenkig aufgenommen sind, wobei der kurze U-förmige Bügel bei Zusammenfahren des Verdeckgestells angehoben wird und die an der Basis des kurzen Bügels angeschlossene Plane damit ebenfalls in Falten gelegt wird. Nachteilig bei dem bekannten Verdeckgestell ist das sehr groß ausfallende Dreieck aus den beiden Lenkern und der Führung, durch das die Plane wiederum bei Zusammenfalten eindringen und sich mit Ladung und ladungssichernden Teilen verhaken kann. Ferner vermögen die steil an dem Schlitten ansetzenden Lenker praktisch keine Kräfte in Verlagerungsrichtung zu übertragen, weshalb die Schlitten bei der Verlagerungsbewegung zum Verkanten neigen. Schließlich muss jeder Lenker sehr lang ausgebildet werden, um zu vermeiden, dass der kurze U-förmige Bügel zu sehr über die Ebene der Basen der starren U-förmigen Bügel angehoben wird. Insgesamt werden hierdurch nicht nur viele Teile und viel Material verbaut, sondern auch der Abstand zueinander bezüglich einer Führung benachbarter Schlitten fällt vergleichsweise gering aus.

EP 0 421 554 A1 beschreibt ein Verdeckgestell für einen Planenaufbau, umfassen eine Mehrzahl entlang einer seitlichen Führung verlagerbarer Schlitten, wobei an zumindest einem oder mehreren der Schlitten zumindest ein Lenker angeschlossen ist, der mit einem Lenker eines bezüglich der gemeinsamen Führung benachbarten Schlittens eine Kopplung aufweist, wobei im Bereich der Kopplung ein Hubbügel angeordnet ist.

EP 0 955 196 A1 beschreibt ein Verdeckgestell für einen Planenaufbau eines Transportfahrzeugs, umfassend eine Mehrzahl entlang einer seitlichen Führung verlagerbarer Schlitten, an jeweils einem Schlitten fest angeordnete U-förmige starre Bügel, wobei an dem U-förmigen starren Bügel zumindest ein Lenker schwenkbar angeordnet ist, wobei der mit einem Lenker eines bezüglich einer gemeinsamen Führung benachbarten Schlittens eine Kopplung aufweist, wobei im Bereich der Kopplung ein Hubbügel angeordnet ist.

DE 100 51 431 A1 zeigt ein Verdeckgestell für einen Planenaufbau eines Transportfahrzeugs, umfassend eine Mehrzahl entlang einer seitlichen Führung verlagerbarer Schlitten, wobei an zumindest einem oder mehreren der Schlitten zumindest ein Lenker angeschlossen ist, der mit einem Lenker eines bezüglich der gemeinsamen Führung benachbarten Schlittens eine Kopplung aufweist.

DE 93 09 466 U1 zeigt ein Verdeckgestell für einen Planenausbau, umfassend eine Mehrzahl entlang einer seitlichen Führung verlagerbarer Schlitten, an jeweils an jedem Schlitten fest angeordnete U-förmige starre Bügel, wobei an zumindest einem oder mehreren der U-förmigen starren Bügel zumindest ein Lenker angeschlossen ist, der mit einem Lenker als bezüglich der gemeinsamen Führung benachbarten Schlittens eine Kopplung aufweist, wobei im Bereich der Kopplung ein Hubbügel angeordnet ist.

Es ist die Aufgabe der Erfindung, ein Verdeckgestell anzugeben, das günstige Eigenschaften bei der Bedienung aufweist und zugleich eine vergleichsweise große Öffnung freigibt.

Diese Aufgabe wird erfindungsgemäß durch ein Verdeckgestell mit den Merkmalen eines unabhängigen Anspruchs gelöst.

Gemäß einem Aspekt der Erfindung wird ein Verdeckgestell für einen Planenaufbau eines Transportfahrzeugs, insbesondere eines Bahnwaggons, angegeben, umfassend eine Mehrzahl entlang einer seitlichen Führung verlagerbarer Schlitten, wobei an zumindest einem oder mehreren der Schlitten zumindest ein Schwenkbügel schwenkbar angeschlossen ist, der bei geschlossenem Planenaufbau einen größeren Winkel zur Vertikalen einnimmt als bei geöffnetem Planenaufbau. Hierbei zeichnet sich das Verdeckgestell dadurch aus, dass an zumindest einem oder mehreren der Schlitten zumindest ein Lenker angeschlossen ist, der mit einem Lenker eines bezüglich einer gemeinsamem Führung benachbarten Schlittens eine Kopplung aufweist, dass im Bereich der Kopplung ein Hubbügel angeordnet ist, und dass der Hubbügel und die Kopplung gegenseitig zumindest in eine vertikale Richtung, also nach oben oder nach unten, axial verlagerbar sind. Hierdurch wird vorteilhaft zum einen erreicht, dass der Abstand der benachbarten Schlitten vergrößert werden kann, indem der Hubbügel in demjenigen Bereich eine Plane stützt, der zwischen einander zugekehrten Schwenkbügeln angeordnet ist, so dass die Schwenkbügel einen größeren Abstand voneinander aufweisen können. Des Weiteren schirmen die an die Schlitten angeschlossenen Lenker und der Hubbügel auch den unteren Bereich der Plane, der im Bereich der seitlichen Wand angeordnet ist, mechanisch ab, so dass die Plane sich nicht nach innen in Falten legen kann und in den Ladebereich des Planenaufbaus hineingelangen kann, wo sie möglicherweise mit Ladung oder ladungssichernden Teilen in Berührung kommen könnte. Schließlich lässt sich das wenige Teile und überdies direkt miteinander gekoppelte Schlitten aufweisende Verdeckgestell leicht öffnen und schließen, da es kaum zum Verkanten neigt. Ferner wird durch die geringe Anzahl Schlitten eine sehr kompakte geöffnete Stellung erreicht, in der die Schwenkbügel, die Lenker und die Hubbügel eng aneinander anliegen, so dass ein großer Anteil der Ladefläche zum Beladen von oben freigegeben wird.

Zweckmäßigerweise sind die Schlitten beiderseits einer in Fahrtrichtung den Planenaufbau halbierenden vertikalen Ebene, die auch als Längshalbierende bezeichnet werden kann, symmetrisch angeordnet, das heißt dort, wo ein Schlitten auf der einen Seite des Verdeckgestells an einer Führung angeordnet ist, befindet sich auch einer auf der gegenüberliegenden Seite an der dortigen Führung, so dass beispielsweise die Schwenkbügel umlaufend, insbesondere U-förmig ausgebildet sein können, mit zwei Schenkeln, die gelenkig an den gegenüberliegenden Schlitten angeschlossen sind, sowie einer Basis, die von den beiden Schenkeln absteht und in dem den Schlitten abgekehrten Bereich vorgesehen ist. Eine Plane des Planenaufbaus wird in bekannter Weise an die Basis des U-förmigen Schwenkbügels angeschlossen.

Bei einer zweckmäßigen Ausgestaltung des Verdeckgestells wird jeder Schlitten mit Schwenkbügeln ausgestattet sein, und zwar jeweils ein Schwenkbügel, der einerseits gegenüber der Vertikalen geneigt ist und ein Schwenkbügel, der andererseits gegenüber der Vertikalen neigbar ist. Es ist möglich, weitere zwei Schwenkbügel an einen Schlitten anzuschließen, dann hätte der Schlitten vier Schwenkbügel, jeweils zwei auf jeder Seite der vertikalen, quer zur Fahrtrichtung verlaufenden Ebene.

Vorzugsweise ist der Hubbügel raumübergreifend, insbesondere ebenfalls U-förmig, ausgebildet und weist eine an die Plane angeschlossene Basis auf, von der sich zwei Schenkel vertikal nach unten erstrecken, so dass der Hubbügel im Wesentlichen in einer senkrecht zur Fahrtrichtung verlaufenden vertikalen Ebene angeordnet ist. Jeder der beiden Schenkel des U-förmigen Hubbügels ist beiderseits der Längshalbieren jeweils an einer Kopplung oder ein Koppelglied senkrecht verlagerbar angeschlossen, so dass bei gegenseitigem Verschwenken der die Kopplung tragenden Lenker zunächst eine Relativbewegung der Kopplung vertikal nach oben bezüglich des Hubbügels erfolgt. Wird dann ein an den Schenkel des Hubbügels ausgebildeter Anschlag, der beispielsweise als radial nach außen weisende Auskragung ausgebildet ist, deren Durchmesser den Durchtritt durch die Kopplung nicht zulässt, von der Kopplung angefahren, nimmt die Kopplung den Anschlag und damit den Schenkel und damit den zugehörigen Hubbügel mit in eine vertikale Verlagerung. Hierbei ist der Anschlag an einer Stelle ausgebildet, die bewirkt, dass der Hubbügel nicht stärker als notwendig angehoben wird. Der Hubbügel, dessen Basis an die Plane angeschlossen ist, wird bei wieder absenkender Kopplung bzw. Lenkern durch die Plane und seine Schwerkraft mit den Schenkeln nach unten gehalten und nachgeführt. Die Kopplung umgreift den Schenkel bei geschlossenem Verdeckgestell vorzugsweise beabstandet von dem Anschlag und hält damit den Schenkel nach Art eines Axiallagers.

Alternativ zu dem U-förmigen Ausbilden des Hubbügels kann der Hubbügel auch jeweils nur aus einem Schenkel und einem abgewinkelt hierzu geformten Basisabschnitt geformt sein, da der Hubbügel keine durchgehende Basis benötigt, um beispielsweise Kräfte von einem Schlitten zu dem diagonal benachbarten Schlitten zu übertragen.

Gemäß einer besonders bevorzugten Ausgestaltung ist vorgesehen, dass der zumindest eine Lenker und der zumindest eine U-förmige Schwenkbügel an derselben Achse an dem Schlitten gelagert sind. Hierbei kann die Achse auch von demselben Lagerzapfen gebildet sein, es können aber auch zwei spezifische Lagerzapfen koaxial an den Schlitten angeordnet sein. Es ist aber auch möglich, die Lagerachsen geringfügig beabstandet voneinander an dem Schlitten anzuordnen. Bei der bevorzugten Ausgestaltung kann einerseits einer Wandung des Schlittens ein Bolzen vorstehen, an dem der eine Lenker angeschlossen ist, während auf der gegenüberliegenden Seite der Wandung ein Bolzen vorsteht, an dem der U-förmige Schwenkbügel schwenkbar angeschlossen ist. Diese Anordnung bewirkt vorteilhaft nicht nur eine kompakte Ausgestaltung des Schlittens durch die geringe Anzahl an Lagerstellen, sondern darüber hinaus auch, dass die Lenker und die an demselben Schlitten auf derselben Seite angeschlossenen U-förmigen Schwenkbügel in Querrichtung, das heißt in der Richtung senkrecht zur Fahrtrichtung voneinander beabstandet sind, und damit aneinander vorbeischwenken können. Damit ist es insbesondere möglich, beim Zusammenbau des Verdeckgestells, aber auch bei dessen Betätigung, ohne gegenseitiges im Weg stehen die Teile zu montieren und zu betätigen. Hierdurch ergibt sich weiter, dass die Basis eines U-förmig ausgebildeten Hubbügels und die Basis des U-förmigen Schwenkbügels nicht zwingend gleich lang sein müssen. Allerdings werden die Teile häufig als standardisierte Bauteile hergestellt sein, so dass die Schenkel nicht vollständig senkrecht zu der Basis angeordnet sind, sondern durch Variation des rechten Winkels um einige Winkelgrade an den nach außen bzw. nach innen weisenden Schaftabschnitt an dem Schlitten anschließbar werden und damit eine leichte Vorspannung aufweisen, die dem Planenaufbau zusätzlichen Halt verleiht.

Zweckmäßigerweise ist bei geschlossenem Planenaufbau der Winkel des zumindest einen Lenkers zur Vertikalen mehr als doppelt so groß wie der Winkel des zumindest einen U-förmigen Schwenkbügels zur Vertikalen. Hierdurch ist einerseits sichergestellt, dass im Zuge des Zusammenschiebens des Verdeckgestells die Schwenkbügel und die Lenker einander nicht gegenseitig behindern. Darüber hinaus führt der relativ stumpfe Öffnungswinkel zwischen miteinander verbundenen Lenkern im Bereich der Kopplung vorteilhaft dazu, dass Kräfte von einem Schlitten zum benachbarten Schlitten besonders günstig in Fahrtrichtung übertragen werden, wodurch sich das Öffnen und Schließen des Verdeckgestells einfach bewerkstelligen lässt und überdies der Materialeinsatz auch bei einem großen Abstand benachbarter Schlitten gering ist. Zugleich wird vorteilhaft erreicht, dass die Kopplung des Hubbügels relativ niedrig angeordnet ist, wodurch der Hubbügel, der die Kopplung verlagerbar durchsetzt, recht nahe an die Führung gelangt, die die Schlitten führt, und damit verhindert, dass in diesem unteren Bereich die Plane in das Innere des Planenaufbaus gelangen kann.

Vorzugsweise macht die Länge des zumindest einen Lenkers weniger als die Hälfte, vorzugsweise weniger als ein Drittel der Länge eines Schenkels des zumindest einen Schwenkbügels aus, so dass der zusätzliche Materialeinsatz zum Vorsehen des Hubbügels sowie der Kopplung und der Lenker gering ausfällt. Zugleich wird ein großer Öffnungswinkel zwischen den miteinander gelenkig gekoppelten Lenkern erreicht, wodurch die Kopplung in einem Bereich der unteren Hälfte der Höhe des Planenaufbaus angeordnet ist.

Zweckmäßigerweise lässt der Hubbügel bei Anheben der Kopplung, ausgehend von einem geschlossenen Zustand des Planenaufbaus, zunächst eine Relativbewegung der Kopplung nach oben zu. Erreicht die Kopplung den Anschlag, nimmt die Kopplung den Hubbügel bei weiterem Anheben mit nach oben. Bei angehobener Plane ist der Hubbügel erst mit der Kopplung nach unten verlagerbar, wobei der Hubbügel mit seinem Basisabschnitt, der an die Plane angeschlossen ist, zunächst mit seinem Anschlag an der Kopplung anliegt und dieser beim Absenken folgt, während er in einem zweiten Bewegungsablaufschritt an der Plane angeschlossen bleibt und die Kopplung bezüglich des Hubbügels weiter abgesenkt wird.

Vorzugsweise ist vorgesehen, dass der Hubbügel zumindest den überwiegenden Teil der Höhe des Verdeckgestells überspannt, wodurch die Plane wirksam daran gehindert wird, in den Innenbereich des Planenaufbaus einzudringen. Hierbei reicht das untere Ende des Schenkels des Hubbügels bis nahe an die Ladeplattform und die Führung.

Gemäß einer besonders bevorzugten Ausgestaltung ist vorgesehen, dass der Schwenkbügel U-förmig ausgebildet ist und eine Basis aufweist, die an die Plane angeschlossen ist, wobei der Hubbügel bzw. dessen Basis mittig beabstandet zwischen zwei einander zugekehrten Basen von Schwenkbügeln an die Plane angeschlossen ist, so dass insbesondere der Abstand des Hubbügels zum einen benachbarten Schwenkbügel und zum anderen benachbarten Schwenkbügel gleich groß ist und eine gleichmäßige Abstützung der Plane beim Öffnen des Verdeckgestells erreicht wird.

Zweckmäßigerweise weisen der Hubbügel und der zumindest eine U-förmige Schwenkbügel dieselbe Materialstärke auf, so dass diese beiden Teile aus teilweise denselben Bestandteilen, wie beispielsweise den abgerundeten Eck- oder Winkelstücken zwischen Basis und Schenkel, zusammengesetzt werden können. Überdies ist die gleiche Materialstärke der Schwenkbügel bzw. des Hubbügels vorteilhaft für die gleichartige Anbindung an die Plane.

Gemäß einer besonders bevorzugten Ausgestaltung ist vorgesehen, dass zwischen bezüglich einer längshalbierenden Ebene gegenüberliegenden Schlitten ein starrer, vorzugsweise ein raumübergreifender, insbesondere U-förmiger, Bügel angeordnet ist, dessen der Basis abgekehrte freien Enden der Schenkel jeweils unschwenkbar an jeweils einen Schlitten angeschlossen sind und dessen den Schlitten abgekehrte Basis ebenfalls mit der Plane in Kontakt steht beziehungsweise die Schenkel miteinader verbindet. Da die starren U-förmigen Bügel beim Zusammenfahren des Verdeckgestells anders als die Schwenkbügel und die Hubbügel ihre Höhe nicht verändern, eignen sich diese in besonderer Weise zur Anbindung der Plane, zugleich bilden diese ein Widerlager für die Schwenkbügel, das diese gegen ein Überschlagen über die vertikale Ebene quer zur Fahrtrichtung verhindert. Vorzugsweise sind die Abstände im Bereich der Plane zwischen der Basis des starren Bügels, der Basis der Schwenkbügel und der Basis des Hubbügels in etwa äquidistant, so dass eine zuverlässige Abstützung der Plane erreicht wird, und insbesondere eine ziehharmonikaartige Faltung des Dachbereichs der Plane, die mit einer entsprechenden Faltung der Seitenteile der Plane einhergeht, erreicht wird. Um eine harmonische Faltung der Plane zu erreichen, kann dann hierbei vorgesehen sein, dass der starre Bügel und der Hubbügel bei geöffnetem, also zusammengeschobenem Verdeckgestell im Wesentlichen in der Ebene des Dachbereichs der Plane verbleiben, während die Schwenkbügel in eine erhöhte Ebene gelangen, so dass alternierend eine niedrige und eine angehobene Faltung der Plane erreicht wird. Soweit der starre Bügel als starr bezeichnet ist, soll damit nicht zum Ausdruck gebracht werden, dass dieser sich gar nicht mehr elastisch deformiert, sondern dass dieser ohne Möglichkeit zum Schwenken um eine Achse ausgebildet ist.

Zweckmäßigerweise weist der Schlitten ein Paar von Tragrollen und ein Paar von Gegenrollen auf, wobei je eine Tragrolle und eine Gegenrolle gemeinsam eine als Führungsschiene mit einem rechteckigen Profil ausgebildete Führung einfasst. Hierdurch wird vorteilhaft erreicht, dass der Schlitten bezüglich der Führung bzw. der Führungsschiene nicht kippt und bei Verlagerung entlang der Führungsschiene die verschiedenen benachbarten Schlitten auch zusammengeschoben werden können. Überdies ist die Ausgestaltung mit zwei Tragrollen und zwei Gegenrollen, die die Führungsschiene von oben bzw. von unten einfassen, mit einem geringen Spiel ausgestattet, so dass durch den starren Bügel und/oder die Schwenkbügel der gegenüberliegende Schlitten bei einseitiger Krafteinleitung mitgenommen wird. Zweckmäßigerweise ist die Führung, die vorzugsweise als Führungsschiene ausgebildet ist, im Bereich einer Ladefläche angeordnet, so dass der Planenaufbau die Ladefläche räumlich überspannt. Die Plane ist hierbei an Teilen des Verdeckgestells angeschlossen, die auch das Anheben der Plane bei Zusammenschieben der Teile des Verdeckgestells bewirken. Es versteht sich, dass alternativ die Führung auch in einem gegenüber der Ladefläche angehobenen Bereich angeordnet sein kann, beispielsweise im Bereich einer von der Ladefläche emporragenden Ladebordwand, die auch den seitlichen Bereich überwiegend ausmachen kann. In diesem Fall ist der Planenaufbau nur noch mit sehr kurzen Schenkeln der U-förmigen Bügel, Schwenkbügel oder Hubbügel ausgestattet, wie dies beispielsweise auch bei einem als Schiebedach ausgebildeten Verdeckgestell für eine Plane der Fall ist.

Vorzugsweise ist ein entlang der Führung verlagerbares Portal vorgesehen, das bei geschlossenem Verdeckgestell in Verlagerungsrichtung des Verdeckgestells in etwa in bzw. nahe der Mitte der Ladefläche angeordnet ist, so dass der Planenaufbau aus zwei grundsätzlich voneinander trennbaren Verdeckgestellen besteht. Die beiden Portale werden bei geschlossenem Verdeckgestell aneinanderliegend gegenseitig verriegelt, wodurch ein besonders langbauender, aus mehr als einem Verdeckgestell bestehender Planenaufbau erreicht wird.

Vorzugsweise ist an der Stirnseite des Verdeckgestells ein nicht verlagerbares Portal vorgesehen, das eine nicht verschiebbare Stirnwand des Planenaufbaus bildet. Alternativ kann die Stirnwand auch auf Schlitten angeordnet sein und damit verlagerbar sein, wodurch vorteilhaft das Verdeckgestell auch an verschiedenen Enden der Ladefläche gruppierbar ist.

Zweckmäßigerweise ist an dem Portal, wahlweise an dem nicht verlagerbaren oder verlagerbaren, eine Stirnwand bildenden Portal oder an dem mittleren verlagerbaren Portal jeweils zumindest ein U-förmiger Schwenkbügel schwenkbar angeschlossen, der bei geschlossenem Planenaufbau einen größeren Winkel zur Vertikalen einnimmt, als bei geöffnetem Planenaufbau, ferner ein Lenker, der mit einem Lenker eines bezüglich einer gemeinsamen Führung benachbarten Schlittens eine Kopplung aufweist. Damit wird auch der Bereich zwischen Schlitten und Stirnwand bzw. zwischen Schlitten und zentralem Portal nach demselben Konzept ausgebaut wie die Schlitten, obgleich es sich nicht um die Verbindung von zwei benachbarten Schlitten handeln muss. Bei dem mittleren verlagerbaren Portal erfolgt die Anbindung zweckmäßigerweise ebenfalls an den das Portal tragenden Schlitten.

Vorzugsweise ist im Bereich der Kopplung zweier Lenker ein Schwenkwinkelbegrenzer vorgesehen, der zumindest einen maximalen Öffnungswinkel zwischen den zwei Lenkern und damit den maximalen Abstand zwischen zwei benachbarten Schlitten begrenzt. Hierdurch wird vorteilhaft verhindert, dass bei Verlagern des Verdeckgestells von einer geöffneten Position in eine geschlossene Position durch Einleitung einer Kraft beispielsweise an einem verlagerbaren Portal die gesamte Kraft über die Plane in dem benachbarten Paar gegenüberliegender Schlitten eingeleitet werden muss, sondern die Lenker ebenfalls diese Kraft auf dem benachbarten Schlitten übertragen. Hierdurch wird vorteilhaft jedes Paar gegenüberliegender Schlitten mit dem benachbarten Paar verkettet und die Plane entlastet.

Vorzugsweise ist der Mittenabstand zweier benachbarter Schlitten größer als die halbe Höhe des Planenaufbaus, vorzugsweise größer als 55 % der Höhe des Planenaufbaus, besonders bevorzugt annähernd 60 % der Höhe des Planenaufbaus. Hierdurch kommt zum Ausdruck, dass der Abstand der Schlitten voneinander auch gerade bei einer großen Höhe des Planenaufbaus trotz des Erfordernisses, die Plane zu falten, groß gewählt werden kann, wodurch auf eine gegebene Länge der Ladefläche weniger Schlitten benötigt werden. Hierdurch wird auch vorteilhaft erreicht, dass das zusammengeschobene Verdeckgestell einen prozentual geringeren Anteil an der Ladefläche einnimmt, und entsprechend große Teile von oben auf die Ladefläche beladen werden können. Die Höhe des Planenaufbaus entspricht dar maximalen Höhe eines starren Bügels über dem Schlitten.

Gemäß einem Aspekt der Erfindung ist ein Planenaufbau eines Transportfahrzeugs geschaffen, insbesondere eines Bahnwaggons, das mindestens eine Plane sowie mindestens ein Verdeckgestell wie vorstehend beschrieben umfasst. Vorzugsweise umfasst der Planenaufbau zwei miteinander verbindbare Verdeckgestelle mit jeweils einer eigenen Plane.

Der vorstehend beschriebene Planenaufbau lässt sich vorteilhaft zum Überbauen eines schienengebundenen Bahnwaggons einsetzen, der besonders sperrige Güter transportiert und bei dem der durch die Fläche des zusammengeschobenen Verdeckgestells eingenommene Raum letztlich der Beladung von oben und damit der Nutzlast verloren geht.

Weitere Vorteile, Weiterbildungen und Eigenschaften ergeben sich aus der nachfolgenden Beschreibung eines bevorzugten Ausführungsbeispiels sowie aus den abhängigen Ansprüchen.

Die Erfindung wird nachstehend unter Bezugnahme auf die anliegenden Zeichnungen anhand eines bevorzugten Ausführungsbeispiels näher erläutert.
- Fig. 1: zeigt eine Seitenansicht eines zwei erfindungsgemäße Verdeckgestelle umfassenden Planenaufbaus.
- Fig. 2: zeigt einen vergrößerten Ausschnitt des Verdeckgestells aus Fig. 1.
- Fig. 3: zeigt in vergrößerter Darstellung einen Schlitten aus Fig. 1 oder 2.

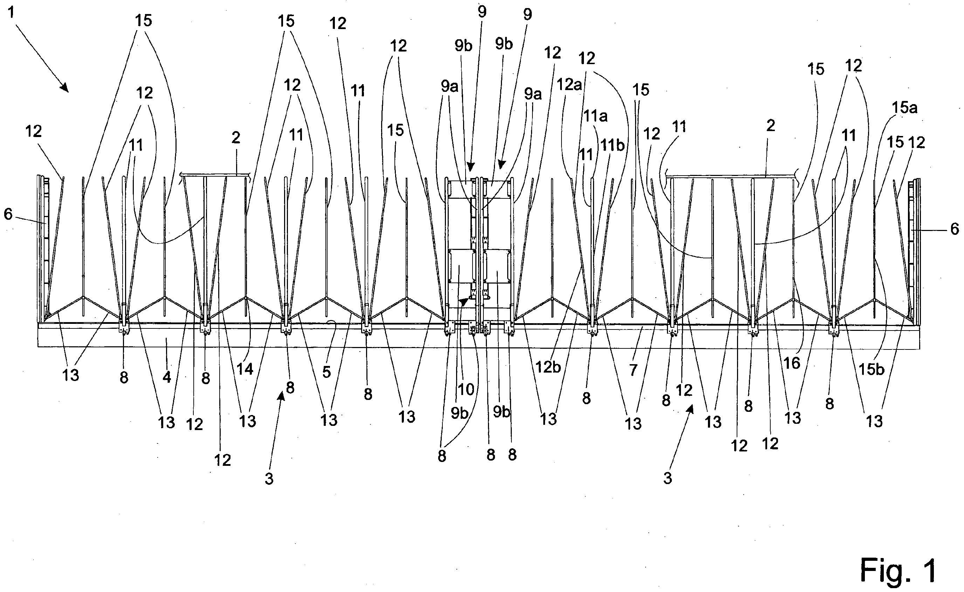

Fig. 1 zeigt eine Seitenansicht eines Planenaufbaus 1, in dem die Plane 2, die als Vollplane ausgebildet ist, nur angedeutet ist, im geschlossenen Zustand. Der Planenaufbau umfasst zwei Verdeckgestelle 3, die jeweils eine Plane 2 abstützten, die sich von einer Unterkante des Verdeckgestells bis zum oberen Ende der Seite des Verdeckgestells erstreckt, dann den Dachbereich überspannt und dann wieder herab bis zur unteren Kante des Verdeckgestells auf der spiegelbildlich ausgebildeten gegenüberliegenden Seite reicht.

Der Planenaufbau 1 überbaut einen Eisenbahnwaggon 4, von dem nur ein Teil dargestellt ist und dessen Achsen und andere hier nicht bedeutsame Teile weggelassen wurden. Der Eisenbahnwaggon 4 weist eine in einer horizontalen Ebene liegende, flache Ladefläche 5 auf, auf der Waren transportiert werden können, gegebenenfalls unter Zuhilfenahme von Ladungssicherungsmitteln. Für den dargestellten langgestreckten Eisenbahnwaggon 4 kommen beispielsweise nahtlos hergestellte Rohre als Ware in Betracht, aber auch andere, insbesondere schwergewichtige Teile können mittels des Eisenbahnwaggons 4 transportiert werden. Der Planenaufbau 1 überbaut die Ladefläche 5 des Eisenbahnwaggons 4 und stellt damit sicher, dass die Ladung sich nicht in Hindernissen aus der Umgebung, beispielsweise Ästen oder herumfliegenden Teilen, verfängt und schützt die Ladung überdies gegen Wettereinflüsse wie Regen, Schnee, Hagel oder dergleichen Niederschläge.

Jedes Verdeckgestell 3 weist eine Stirnwand 6 auf, die jeweils an einem Ende des Eisenbahnwaggons 4 die Ladefläche 5 emporragt und einen Abschluss für den Planenaufbau 1 bildet. Die Stirnwand 6 ist vorliegend auf die Ladefläche 5 gebaut und nicht in Richtung der Erstreckung der Ladefläche 5 verlagerbar. Es ist aber möglich, die Stirnwand 6 mit einem Schlitten wie nachstehend noch beschrieben auszustatten, um diese ebenfalls entlang der Längsachse des Eisenbahnwaggons 4 zu verlagern.

An einer nach außen gerichteten Seite des Eisenbahnwaggons 4, geringfügig unterhalb der Ebene der Ladefläche 5, ist eine, meist aus mehreren Teilen zusammengesetzte, als Rechteckprofil ausgebildete Führungsschiene 7 angeschlossen, die eine Führung für das Verdeckgestell bildet. Die Führungsschiene 7 ist beiderseits der Ladefläche 5 an der Längskante des Eisenbahnwaggons vorgesehen und verläuft damit parallel zu der Fahrtrichtung bzw. der Längsrichtung des Eisenbahnwaggons 4. Die Führungsschiene 7 ist etwas beabstandet von dem Eisenbahnwaggon 4 gehalten, so dass entlang der Führungsschiene 7 auf der Führungsschiene 7 aufgenommene Schlitten 8 verlagert werden können, ohne durch Reibung oder anderen Kontakt mit dem Eisenbahnwaggon 4 bzw. der Ladefläche 5 gebremst zu werden.

An dem der Stirnwand abgekehrten Ende des Verdeckgestells 3 ist ein jeweils auf zwei Schlitten 8 getragenes, U-förmiges Portal 9, das über die Schlitten 8 entlang der Führungsschiene 7 verlagerbar ist, vorgesehen. Während die Stirnwand 6 eine geschlossene Wand bildet, die den Planenaufbau 1 stirnseitig abschließt, ist das Portal 9 nach Art eines Torbogens ausgebildet, da dieser die Ladung ebenso überspannen muss wie beispielsweise die Plane. Die beiden einander zugekehrten Portale 9 können gegenseitig verriegelt werden, um einen wasserdichten Abschluss der beiden Verdeckgestelle zu schaffen. Wird die Verriegelung der beiden Portale 9 gelöst, können die Verdeckgestelle in Richtung auf die jeweilige zugehörige Stirnwand 6 unter Zusammenfalten des Planenaufbaus 1 verschoben werden, was nachstehend noch genauer erläutert wird.

Jedes Portal 9 weist zwei starre, U-förmige Bügel 9a auf, die unbeweglich jeweils an den Schlitten 8 angeschlossen sind und zwischen denen Versteifungselemente 9b für eine Aussteifung sorgen. Die Versteifungselemente 9b sind jeweils an die Bügel 9a angeschweißt oder angenietet. Mit 10 ist die Verriegelung bezeichnet, die die beiden Portale 9 gegenseitig verriegelt. Die Plane 2 ist hierbei so an den äußeren Bügeln 9a angeschlossen, dass, gegebenenfalls unter Zuhilfenahme einer Dichtungsanordnung, der Planenaufbau 1 gegenüber der Umgebung abgedichtet ist.

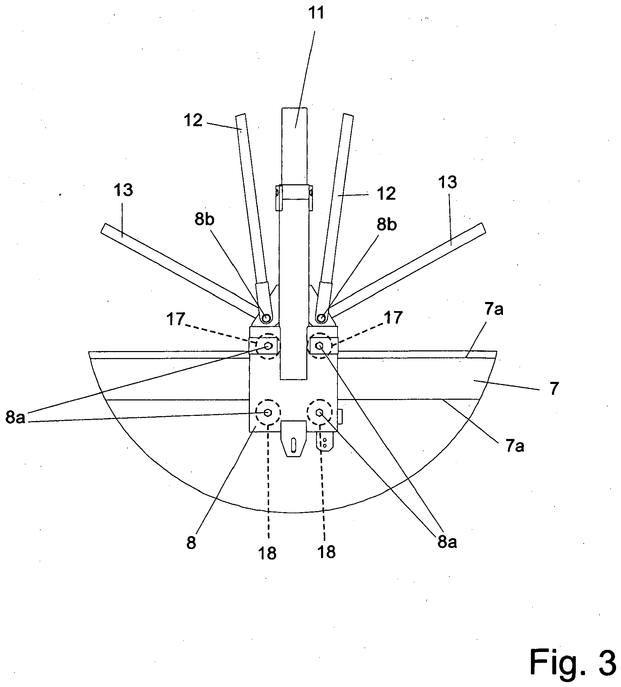

In etwa äquidistanten Abständen zwischen Portal 9 und Stirnwand 6 sind an der Führungsschiene 7 bei dem in Fig. 1 dargestellten geschlossenen Zustand des Verdeckgestells 3 die Schlitten 8 angeordnet, die jeweils zwei obere Tragrollen 17 und zwei in derselben vertikalen Achse angeordnete, gleich große untere Gegenrollen 18 aufweisen (vgl. Fig. 3), die sich auf einer oberen Kante und einer unteren Kante der Führungsschiene 7 abstützen. Es ist möglich, weitere Führungsrollen oder Gleiter vorzusehen, die den Schlitten 8 gegen die äußere Kante der Ladefläche 5 abstützen. In Fig. 3 erkennt man in gestrichelter Darstellung die Tragrollen 17 und die Gegenrollen 18, die um Achsen 8a drehbar sind und die sich von oben und von unten gegen die Schmalseiten 7a der Führungsschiene 7 abstützen.

An jedem der Schlitten 8, der zwischen Stirnwand 6 und Portal 9 angeordnet ist, ist ein starrer U-förmiger Bügel 11 angeschlossen, der in einer vertikalen Ebene liegt und der einen auf der einen Seite der Ladebordwand vorgesehenen Schlitten 8 mit einem bezüglich einer Längshalbierenden des Planenaufbaus 1 gegenüberliegenden Schlitten 8 verbindet. Die Längshalbierende ist diejenige vertikale Ebene, die mittig zwischen den Führungsschienen und parallel zu diesen angeordnet ist und die Ladefläche 5 in zwei Hälften teilt sowie in Fahrtrichtung des Eisenbahnwaggons 4 verläuft.

Der starre U-förmige Bügel 11 umschreibt in etwa ein Rechteck, genauer ein Vieleck, mit abgerundeten Ecken, das heißt der Übergang von der Basis 11 a des Bügels 11, die dem Schlitten 8 abgekehrt ist, zu den Schenkeln 11 b, die die Basis 11a jeweils mit dem Schlitten 8 verbinden, ist als kleiner Radius ausgebildet. Es ist allerdings möglich, den Bügel auch mit einer an den Buchstaben U stärker angenäherten Form auszuführen, oder aber in der für Planenaufbauten für Eisenbahnwaggons üblichen Gestalt mit mehreren geraden Segmenten, die insgesamt eine leicht prismatische Außenkontur, die an das U angenähert ist, aufweisen, auszubilden. Insbesondere ist die Basis des Bügels 11 nach Art eines Satteldachs mit zwei abfallenden Abschnitten ausgebildet. Alle vorgenannten Bügelvarianten sind als U-förmig anzusehen. So ist zu verstehen, dass die Basis des U-förmigen Bügels nicht zwangsläufig eine langgestreckte Strecke sein muss, sondern auch nur der weiteste von den Schlitten 8 entfernte Punkt.

Beiderseits des starren Bügels 11 ist gelenkig an den Schlitten 8 ein Schwenkbügel 12, dessen Länge etwas größer ist als die des starren Bügels 11, gelenkig angeschlossen. Der Schwenkbügel 12 weist ebenfalls eine U-Form mit Basis 12a und Schenkel 12b auf.

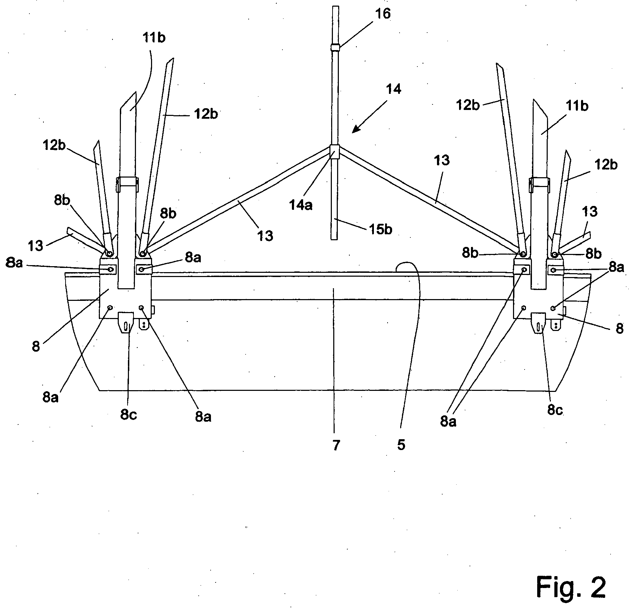

Schließlich ist an jedem Schlitten 8 beiderseits des starren Bügels 11 ein Lenker 11 gelenkig angeschlossen, der mit einem zugekehrten weiteren Lenker 13 eines benachbarten Schlittens 8 oder des benachbarten Portals 9 oder der Stirnwand 6 eine Kopplung 14 bildet. Die Kopplung 14 weist ein gemeinsames Lager für die beiden miteinander verbundenen Lenker 13 auf, ferner eine hohlzylindrische Führungsbuchse 14a (Fig. 2) für die Aufnahme eines Hubbügels 15. Es ist möglich, die Gelenke der beiden Lenker 13 an der Führungsbuchse 14a voneinander beabstandet vorzusehen oder die Führungsbuchse 14a und die Lager der beiden Lenker 13 an einer gemeinsamen Platte anzubringen.

Der Hubbügel 15 ist ebenfalls U-förmig ausgebildet, wobei dieser im Bereich in seiner Basis 15a an die Plane 2 angeschlossen ist und von dieser getragen wird. Der Schenkel 15b des Hubbügels 15 durchsetzt die Führungsbuchse 14a der Kopplung 14 und ist in dieser axial beweglich. Bei geschlossenem Verdeckgestell weist der Schenkel 15b des Hubbügels 15 einen von der Führungsbuchse 14a beabstandeten Anschlag 16 auf, der radial über den Innendurchmesser der Führungsbuchse 14a übersteht und damit verhindert, dass der Schenkel 15b bei weiterem Schließen des Winkels zwischen den beiden in der Kopplung 14 gekoppelten Lenkern 13 weiter relativ zu der Kopplung 14 nach unten gelangt - tatsächlich wird die Kopplung 14 angehoben. Die Kopplung hebt dann den Hubbügel 15 über den Anschlag 16 nach oben an, wodurch die an die Basis 15a des Hubbügels 15 angeschlossene Plane 2 angehoben wird.

In Fig. 2 ist ein Ausschnitt des Planenaufbaus 1 in größeren Einzelheiten dargestellt. Man erkennt, dass der Schlitten 8 die vier Lagerstellen 8a aufweist, die jeweils eine Tragrolle 17 oder eine Gegenrolle 18 tragen, die sich gegen die Schmalseite der Führungsschiene 7 abstützt und damit den Schlitten 8 an der Führungsschiene 7 fixiert. Man erkennt ferner, dass die Schwenkbügel 12 und die Lenker 13 auf einer gemeinsamen Achse 8b an dem Schlitten 8 angeschlossen sind, wobei die Schwenkbügel 12 an einer nach außen weisenden Seite des Schlittens 8 angeschlossen sind, während die Lenker 13 an einer nach innen weisenden Seite des Schlittens 8 jeweils an diesen angeschlossen sind. Weiterhin erkennt man, dass an den Schlitten 8 ein Stutzen 8c angesetzt ist, in den der Schenkel 11 b des starren Bügels 11 eingeführt ist. Weiterhin erkennt man, dass an der Unterseite des Schlittens 8 ein Anschlussmittel 8c für die Plane 2 vorgesehen ist.

Fig. 2 zeigt ferner, dass die Führungsbuchse 14a auf der nach außen weisenden Seite der gelenkigen Verbindung der beiden Lenker 13 im Bereich der Kopplung 14 vorgesehen ist, und dass der Schenkel 15b des Hubbügels 15 bis nahe an die Ladefläche 5 reicht. Der Anschlag 16 an dem Schenkel 15b des Hubbügels 15 ist derart von der Führungsbuchse 14a beabstandet, dass der Hubbügel 15 erst in einer zweiten Phase des Zusammenfahrens der Schlitten 8 durch die Führungsbuchse 14a aufgrund der Verschwenkung der Lenker 13 zu den ihrem Schlitten 8 zugeordneten starren Bügeln 11 erreicht wird und dann den Hubbügel 15 anhebt.

Die Kopplung 14 umfasst weiter einen nicht im einzelnen dargestellten Schwenkwinkelbegrenzer, der verhindert, dass beim Schließen des Planenaufbaus 1 die beiden die Kopplung 14 tragenden Lenker 13 weiter auseinander gezogen werden als dies für den geschlossenen Planenaufbau 1 erforderlich ist. Hierdurch werden die Schlitten 8 gegenseitig in eine exakte Position verbracht und Schwingungen innerhalb des Verdeckgestells 3, auch während der Fahrt, sind minimiert; zugleich werden entsprechende Schwingungen primär in die Lenker 13 eingeleitet und nicht in die Plane 2, deren Lebensdauer hierdurch signifikant verlängert wird.

Die Erfindung funktioniert nun wie folgt:
Ausgehend vom geschlossenen Zustand, der in Fig. 1 dargestellt ist, wird die Verriegelung 10 gelöst und die beiden Portale 9 in Richtung auf die Stirnwand 6 mittels ihrer Schlitten 8 entlang der Führung 7 verschoben. Hierdurch werden zum einen die an einer Kopplung 14 miteinander verbundenen Lenker 13 sukzessive in Richtung auf die starren U-förmigen Bügel 11 verschwenkt,
wodurch die Kopplung 14 angehoben wird und der Abstand benachbarter Schlitten 8 sich reduziert. Erreicht die Führungsbuchse 14a der Kopplung 14 den Anschlag 16, wird der Hubbügel 15 durch die beiderseits der Längsebene vorgesehene Kopplung 14 angehoben, und die mit der Basis des Hubbügels 15 verbundene, Plane 2 legt sich in Falten. Weiterhin werden beim Zusammenfahren der Schlitten 8 die Schwenkbügel 12 in Richtung auf die starren Bügel 11 verschwenkt, wodurch die Basis 12a der Schwenkbügel 12 sich über die Basis 11a des starren Bügels 11 erhöht und die Plane 2 ebenfalls in Falten legt. Sind die benachbarten Schlitten 8 nahezu vollständig, jedenfalls aber eng zusammengefahren, befinden sich der Hubbügel 15 und die Schwenkbügel 12 in ihrer maximal angehobenen Position, und die Plane 2 ist in Falten gelegt. Da die Plane 2 auch die Seitenwände des Planenaufbaus 1 bedeckt, ist die Plane 2 im Bereich nahe der Schlitten 8 bzw. der Führungsschiene 7 ebenfalls angehoben und in Falten gelegt. Die Lenker 13 und der Hubbügel 15 verhindern jedoch, dass die Plane 2 in diesem unteren Bereich in den inneren Bereich des Planenaufbaus 1 eindringen kann,
jedenfalls mit so großen Bereichen eindringen kann, dass es zu einem Verhaken mit Ladung oder ladungssichernden Teilen kommen kann.

Da der Planenaufbau 1 zwei Verdeckgestelle 3 mit jeweils einer eigenen Plane 2 aufweist, ist auch erkennbar, dass es sich nicht um eine beide Verdeckgestelle 3 überspannende gemeinsame Plane 2 handelt, sondern dass zwei Planen 2 hierfür vorgesehen sind. Diese Plane 2 ist jeweils an der Stirnwand 6 und an dem Portal 9 mit entsprechenden Abdichtmitteln eingespannt, um zu verhindern, dass Feuchtigkeit an den Verbindungsstellen eindringen kann.

Wird der Planenaufbau 1 wieder geschlossen, werden die Portale 9 jeweils in Richtung des jeweils anderen Portals 9 verfahren, bis diese in Kontakt gelangen und dann über die Verriegelung 10 gegenseitig verspannt werden. Hierbei entfalten sich die Planen 2 wieder, und es entsteht ein im Wesentlichen bündiger, geschlossener Planenaufbau 1 wie in Fig. 1 dargestellt.

Die Erfindung ist vorstehend anhand eines Ausführungsbeispiels erläutert worden, bei dem der starre Bügel 11, die Schwenkbügel 12 und der Hubbügel 15 jeweils als die Ladefläche 5 im Wesentlichen übergreifende U-förmige Bügel ausgebildet sind. Es versteht sich, dass die Bügel aus mehreren Teilen zusammengesetzt sein können, die Funktion wird aber auch dann erreicht, wenn die Bügel aus nicht miteinander verbundenen Teilen bestehen, wenn die Plane 2 also die Funktion der fehlenden Verbindungsteile übernimmt. So könnten beispielsweise einige der Bügel als Winkelstücke ausgebildet sein, die einerseits und andererseits der Längshalbierenden angeordnet sind, während die Plane 2 die Winkelstücke miteinander verbindet und damit die Verbindung von der einen Seite zu der anderen Seite des Planenaufbaus schafft.

Die Erfindung ist vorstehend anhand eines Ausführungsbeispiels beschrieben worden, bei dem der Hubbügel 15 in einer Endphase des Zusammenschiebens des Verdeckgestells angehoben wird. Nachdem bei der Ausgestaltung gemäß dem Ausführungsbeispiel bereits die Schwenkbügel 12 die Plane anheben, kann es vorgesehen sein, dass der Hubbügel 15 nicht angehoben wird, der Anschlag 16 mithin nur eine Begrenzung für die Lenker 13 bildet, damit diese nicht überschlagen. Dann ergibt sich eine Planenfaltung, bei der die Plane 2 im Bereich des Hubbügels 15 und des starren Bügels 11 in etwa auf derselben Höhe gehalten sind wie bei dem geöffneten Planenaufbau 1, während die Schwenkbügel 12 die Plane 2 anheben und damit eine recht regelmäßige Akkordeon- oder Ziehharmonikafaltung erreichen. Auch bei dieser Ausführungsform sind der Hubbügel und die Kopplung gegenseitig in zumindest eine vertikale Richtung axial verlagerbar, es erfolgt jedoch in der Regel keine Mitnahme des Hubbügels durch die Kopplung.

Die Erfindung ist vorstehend anhand eines Ausführungsbeispiels beschrieben worden, bei dem die Basis der Bügel 11, 12 und 15 einen flachen horizontalen Abschnitt aufweisen können. Im Hinblick auf das Verhindern von Wasserpfützen auf der Plane 2 ist die Basis jedoch zweckmäßigerweise giebelartig ausgebildet, das heißt sie bildet ein umgekehrtes V mit einem großen Öffnungswinkel zwischen den Schenkeln des V. Hierdurch wird vorteilhaft erreicht, dass Niederschläge zu den Seiten abgeführt werden, überdies ist diese Ausgestaltung auch besonders aerodynamisch günstig im Fahrbetrieb.

Die Erfindung ist vorstehend anhand eines Ausführungsbeispiels beschrieben worden, bei dem die Schwenkbügel 12 auf der nach außen weisenden Wandung des Schlittens 8 und die Lenker 13 auf der nach innen weisenden Wandung des Schlittens 8 angeschlossen sind. Es versteht sich, dass sowohl eine umgekehrte Anordnung als auch das Anschließen von Schwenkbügel 12 und Lenker 13 auf derselben Seite des Schlittens 8 möglich ist.

Die Erfindung ist vorstehend anhand eines Ausführungsbeispiels beschrieben worden, bei dem beiderseits des starren Bügels 11 jeweils ein Schwenkbügel 12 und ein Lenker 13 angeordnet sind. Es versteht sich, dass auch mehr als ein Schwenkbügel und mehr als ein Lenker vorgesehen sein können, die dann in unterschiedlichen Winkeln zueinander abstehen und das Verdeckgestell weiter stabilisieren.

Die Erfindung ist vorstehend anhand eines Ausführungsbeispiels beschrieben worden, bei der die einander zugekehrten Lenker 13 im Bereich einer Kopplung 14 eine Führungsbuchse 14a für einen Hubbügel 15 tragen. Es versteht sich, dass die Kopplung 14 auch zwei Zwischenlenker umfassen kann, so dass eine Kette aus Lenker, Zwischenlenker, Zwischenlenker und Lenker realisiert ist, wobei im Bereich der gelenkigen Verbindung jeweils eine Führungsbuchse 14a vorgesehen ist, so dass insgesamt drei Hubbügel in jeweils einer Führungsbuchse 14a angeordnet werden können, wodurch der Abstand benachbarter Schlitten 8 noch weiter vergrößert werden kann.

## Patentansprüche

1. Verdeckgestell für einen Planenaufbau (1) eines Transportfahrzeugs (4), insbesondere eines Bahnwaggons (4), umfassend
eine Mehrzahl entlang einer seitlichen Führung (7) verlagerbarer Schlitten (8),
wobei an zumindest einem oder mehreren der Schlitten (8) zumindest ein Schwenkbügel (12) schwenkbar angeschlossen ist, der bei geschlossenem Planenaufbau (1) einen größeren Winkel zur Vertikalen einnimmt als bei geöffnetem Planenaufbau (1),
**dadurch gekennzeichnet,**
**dass** an zumindest einem oder mehreren der Schlitten (8) zumindest ein Lenker (13) angeschlossen ist, der mit einem Lenker (13) eines bezüglich einer gemeinsamen Führung (7) benachbarten Schlittens (8) eine Kopplung (14) aufweist,
**dass** im Bereich der Kopplung (14) ein Hubbügel (15) angeordnet ist, und
**dass** die Kopplung (14) bezüglich des Hubbügels (15) zumindest in eine vertikale Richtung axial verlagerbar ist.

2. Verdeckgestell nach Anspruch 1, **dadurch gekennzeichnet, dass** der Hubbügel (15) U-förmig ist und eine an die Plane (2) angeschlossene Basis (15a) aufweist, von der sich zwei Schenkel (15b) vertikal erstrecken.

3. Verdeckgestell nach einem der vorhergehenden Ansprüche, **dadurch gekennzeichnet, dass** der zumindest eine Lenker (13) und der zumindest eine U-förmige Schwenkbügel (12) um dieselbe Achse (8b) schwenkbar gelagert sind.

4. Verdeckgestell nach einem der vorhergehenden Ansprüche, **dadurch gekennzeichnet, dass** bei geschlossenem Planenaufbau (1) der Winkel des zumindest einen Lenkers (13) zur Vertikalen mehr als doppelt so groß ist als der Winkel des zumindest einen U-förmige Schwenkbügels (12) zur Vertikalen.

5. Verdeckgestell nach einem der vorhergehenden Ansprüche, **dadurch gekennzeichnet, dass** die Länge des zumindest einen Lenkers (13) weniger als die Hälfte, vorzugsweise weniger als ein Drittel eines Schenkels (12b) des zumindest einen U-förmige Schwenkbügels (12) ausmacht.

6. Verdeckgestell nach einem der vorhergehenden Ansprüche, **dadurch gekennzeichnet, dass** die Kopplung (14) den Hubbügel (15) nach Art eines Axiallagers umgreift.

7. Verdeckgestell nach einem der vorhergehenden Ansprüche, **dadurch gekennzeichnet, dass** der Hubbügel (15) bei Anheben der Kopplung (14) ausgehend von einem geschlossenen Zustand des Planenaufbaus (1) zunächst eine Relativbewegung der Kopplung (14) nach oben zulässt.

8. Verdeckgestell nach einem der vorhergehenden Ansprüche, **dadurch gekennzeichnet, dass** der Hubbügel (15) zumindest den überwiegenden Teil der Höhe des Verdeckgestells (3) überspannt, dass der Hubbügel (15) an die Plane (2) angeschlossen ist, und dass der zumindest eine U-förmige Schwenkbügel (12) an die Plane (2) angeschlossen ist, und dass der Hubbügel (15) mittig beabstandet zwischen zwei einander zugekehrten U-förmigen Schwenkbügeln (12) an die Plane (2) angeschlossen ist.

9. Verdeckgestell nach einem der vorhergehenden Ansprüche, **dadurch gekennzeichnet, dass** der Hubbügel (15) und der zumindest eine U-förmige Schwenkbügel (12) dieselbe Materialstärke aufweisen.

10. Verdeckgestell nach einem der vorhergehenden Ansprüche, **dadurch gekennzeichnet, dass** zwischen bezüglich einer längshalbierenden Ebene gegenüberliegenden Schlitten (8) ein starrer U-förmiger Bügel (11) angeordnet ist.

11. Verdeckgestell nach einem der vorhergehenden Ansprüche, **dadurch gekennzeichnet, dass** der Schlitten (8) ein Paar von Tragrollen (17) und ein Paar von Gegenrollen (18) aufweist, die gemeinsam die als Führungsschiene (7) ausgebildete Führung einfassen, und dass die Führung (7) im Bereich einer Ladefläche (5) angeordnet ist, und dass der Planenaufbau (1) die Ladefläche (5) räumlich überspannt.

12. Verdeckgestell nach einem der vorhergehenden Ansprüche, **dadurch gekennzeichnet, dass** ein entlang der Führung (7) verlagerbares Portal (9) vorgesehen ist, das mit einem weiteren Portal (9) gegenseitig verriegelbar ist, dass ein eine Stirnwand (6) ausbildendes nicht verlagerbares Portal (6) vorgesehen ist, dass an dem Portal (6; 9) jeweils zumindest ein U-förmiger Schwenkbügel (12) schwenkbar angeschlossen ist, der bei geschlossenem Planenaufbau (1) einen größeren Winkel zur Vertikalen einnimmt als bei geöffnetem Planenaufbau (1), und dass an dem Portal (6; 9) zumindest ein Lenker (13) angeschlossen ist, der mit einem Lenker (13) eines bezüglich einer gemeinsamen Führung (7) benachbarten Schlittens (8) eine Kopplung (14) aufweist.

13. Verdeckgestell nach einem der vorhergehenden Ansprüche, **dadurch gekennzeichnet, dass** im Bereich der Kopplung (14) zweier Lenker (13) ein Schwenkwinkelbegrenzer vorgesehen ist, der zumindest einen maximalen Öffnungswinkel zwischen den zwei Lenkern (13) und damit den maximalen Abstand zwischen zwei benachbarten Schlitten (8) begrenzt.

14. Verdeckgestell nach einem der vorhergehenden Ansprüche, **dadurch gekennzeichnet, dass** der Mittenabstand zweier benachbarter Schlitten (8) größer ist als die halbe Höhe des Planenaufbaus (1), vorzugsweise größer als 55% der Höhe des Planenaufbaus (1), besonders bevorzugt annähernd 60% der Höhe des Planenaufbaus (1).

15. Planenaufbau eines Transportfahrzeugs (4), insbesondere eines Bahnwaggons (4), umfassend eine Plane (2) und zumindest ein Verdeckgestell (3) nach einem der vorhergehenden Ansprüche.

## Claims

1. A covering frame for a tarpaulin structure (1) of a transport vehicle (4), in particular a railway wagon (4), comprising
a plurality of carriages (8) which are displaceable along a lateral guide (7),
wherein at least one pivoting bow (12) is pivotably connected to at least one or more of the carriages (8) and, with the tarpaulin structure (1) closed, assumes a greater angle to the vertical than with the tarpaulin structure (1) opened,
**characterized in**
**that** at least one link (13) is connected to at least one or more of the carriages (8) and has a coupling (14) to a link (13) of a carriage (8) which is adjacent with respect to a lateral guide (7),
**that** a lifting bow (15) is arranged in the region of the coupling (14), and that the coupling (14) is axially displaceable with respect to the lifting bow (15) at least in a vertical direction.

2. The covering frame according to claim 1, **characterized in that** the lifting bow (15) is U-shaped and has a base (15a) which is connected to the tarpaulin (2) and from which two legs (15b) extend vertically.

3. The covering frame according to one of the preceding claims, **characterized in that** the at least one link (13) and the at least one U-shaped pivoting bow (12) are mounted so as to be pivotable about the same axis (8b).

4. The covering frame according to one of the preceding claims, **characterized in that**, when the tarpaulin structure (1) is closed, the angle of the at least one link (13) to the vertical is more than twice that of the angle of the at least one U-shaped pivoting bow (12) to the vertical.

5. The covering frame according to one of the preceding claims, **characterized in that** the length of the at least one link (13) is less than half, preferably less than a third, of a leg (12b) of the at least one U-shaped pivoting bow (12).

6. The covering frame according to one of the preceding claims, **characterized in that** the coupling (14) engages around the lifting bow (15) in the manner of an axial bearing.

7. The covering frame according to one of the preceding claims, **characterized in that**, during lifting of the coupling (14), the lifting bow (15), starting from a closed state of the tarpaulin structure (1), initially allows an upward relative movement of the coupling (14).

8. The covering frame according to one of the preceding claims, **characterized in that** the lifting bow (15) spans at least the most part of the height of the covering frame (3), that the lifting bow (15) is connected to the tarpaulin (2), and that the at least one U-shaped pivoting bow (12) is connected to the tarpaulin (2), and that the lifting bow (15) is connected to the tarpaulin (2) centrally and spaced apart between two mutually facing U-shaped pivoting bows (12).

9. The covering frame according to one of the preceding claims, **characterized in that** the lifting bow (15) and the at least one U-shaped pivoting bow (12) have the same material thickness.

10. The covering frame according to one of the preceding claims, **characterized in that** a rigid U-shaped bow (11) is arranged between carriages (8) which are situated opposite with respect to a longitudinally bisecting plane.

11. The covering frame according to one of the preceding claims, **characterized in that** the carriage (8) has a pair of support rollers (17) and a pair of counter-rollers (18) which together enclose the guide formed as a guide rail (7), and that the guide (7) is arranged in the region of a loading surface (5), and that the tarpaulin structure (1) areally spans the loading surface (5).

12. The covering frame according to one of the preceding claims, **characterized in that** a portal (9) which can be displaced along the guide (7) is provided, which portal can be mutually locked with a further portal (9), that a non-displaceable portal (6) forming an end wall (6) is provided, that at least one U-shaped pivoting bow (12) is pivotably connected to each of the portals (6; 9) and, with the tarpaulin structure (1) closed, assumes a greater angle to the vertical than with the tarpaulin structure (1) opened, and that at least one link (13) is connected to the portal (6; 9) and has a coupling (14) to a link (13) of a carriage (8) which is adjacent with respect to a common guide (7).

13. The covering frame according to one of the preceding claims, **characterized in that** a pivoting angle limiter is provided in the region of the coupling (14) of two links (13) and limits at least a maximum opening angle between the two links (13) and thus the maximum spacing between two adjacent carriages (8).

14. The covering frame according to one of the preceding claims, **characterized in that** the centre spacing of two adjacent carriages (8) is greater than half the height of the tarpaulin structure (1), preferably greater than 55% of the height of the tarpaulin structure (1), particularly preferably approximately 60% of the height of the tarpaulin structure (1).

15. A tarpaulin structure of a transport vehicle (4), in particular a railway wagon (4), comprising a tarpaulin (2) and at least one covering frame (3) according to one of the preceding claims.

## Revendications

1. Bâti de toit destiné à une structure de bâche (1) d'un véhicule de transport (4), en particulier d'un wagon de chemin de fer (4), comprenant
une pluralité de chariots (8) déplaçables le long d'un guide latéral (7),
au moins un arceau pivotant (12) étant relié de façon pivotante à au moins un ou plusieurs des chariots (8), lequel arceau pivotant forme par rapport à la verticale, lorsque la structure de bâche (1) est fermée, un angle qui est supérieur à celui formé lorsque la structure de bâche est ouverte (1),
**caractérisé en ce que**
au moins une bielle (13) est reliée à au moins un ou plusieurs des chariots (8), laquelle bielle (13) comporte un accouplement (14) avec une bielle (13) d'un chariot (8) adjacent par rapport à un guide commun (7),
un arceau de levage (15) est disposé dans la zone de l'accouplement (14), et
l'accouplement (14) peut être déplacé axialement au moins dans une direction verticale par rapport à l'arceau de levage (15).

2. Bâti de toit selon la revendication 1, **caractérisé en ce que** l'arceau de levage (15) est en forme de U et comporte une base (15a) qui est reliée à la bâche (2) et de laquelle deux branches (15b) s'étendent verticalement.

3. Bâti de toit selon l'une des revendications précédentes, **caractérisé en ce que** l'au moins une bielle (13) et l'au moins un arceau pivotant (12) en forme de U sont articulés de façon pivotante sur le même axe (8b).

4. Bâti de toit selon l'une des revendications précédentes, **caractérisé en ce que**, lorsque la structure de bâche (1) est fermée, l'angle de l'au moins une bielle (13) par rapport à la verticale est deux fois plus grand que l'angle de l'au moins un arceau pivotant (12) en forme de U par rapport à la verticale.

5. Bâti de toit selon l'une des revendications précédentes, **caractérisé en ce que** la longueur de l'au moins une bielle (13) est inférieure à la moitié, de préférence inférieure à un tiers, d'une branche (12b) de l'au moins un arceau pivotant (12) en forme de U.

6. Bâti de toit selon l'une des revendications précédentes, **caractérisé en ce que** l'accouplement (14) s'engage autour de l'arceau de levage (15) à la manière d'un palier axial.

7. Bâti de toit selon l'une des revendications précédentes, **caractérisé en ce que**, lorsque l'accouplement (14) se soulève depuis un état fermé de la structure de bâche (1), l'arceau de levage (15) permet tout d'abord un mouvement relatif de l'accouplement (14) vers le haut.

8. Bâti de toit selon l'une des revendications précédentes, **caractérisé en ce que** l'arceau de levage (15) couvre au moins la majeure partie de la hauteur du bâti de toit (3), **en ce que** l'arceau de levage (15) est relié à la bâche (2), et **en ce que** l'au moins un arceau pivotant (12) en forme de U est relié à la bâche (2), et **en ce que** l'arceau de levage (15) est relié à la bâche (2) à mi-distance entre deux arceaux pivotants (12) en forme de U adjacents l'un à l'autre.

9. Bâti de toit selon l'une des revendications précédentes, **caractérisé en ce que** l'arceau de levage (15) et l'au moins un arceau pivotant (12) en forme de U ont la même épaisseur de matière.

10. Bâti de toit selon l'une des revendications précédentes, **caractérisé en ce qu'**un arceau rigide (11) en forme de U est disposé entre des chariots (8) opposés par rapport à un plan bissecteur longitudinal (8).

11. Bâti de toit selon l'une des revendications précédentes, **caractérisé en ce que** le chariot (8) comprend une paire de rouleaux de support (17) et une paire de rouleaux homologues (18) qui bordent conjointement le guide conformé en rail de guidage (7), et **en ce que** le guide (7) est disposé dans la zone d'une surface de chargement (5), et **en ce que** la structure de bâche (1) couvre spatialement la surface de chargement (5).

12. Bâti de toit selon l'une des revendications précédentes, **caractérisé en ce qu'**il est prévu un portique (9) qui est déplaçable le long du guide (7) et qui peut être mutuellement verrouillé à un autre portique (9), **en ce qu'**il est prévu un portique non-déplaçable (6) qui forme une paroi d'extrémité (6), **en ce qu'**au moins un arceau pivotant (12) en forme de U est relié de façon pivotante à chacun des portiques (6 ; 9), lequel arceau pivotant forme par rapport à la verticale, lorsque la structure de bâche est fermée (1), un angle qui est supérieur à celui formé lorsque la structure de bâche (1) est ouverte et **en ce qu'**au moins une bielle (13) est reliée au portique (6 ; 9), laquelle bielle (13) comporte un accouplement (14) avec une bielle (13) d'un chariot (8) adjacent par rapport à un guide commun (7).

13. Bâti de toit selon l'une des revendications précédentes, **caractérisé en ce qu'**il est prévu dans la zone de l'accouplement (14) de deux bielles (13) un limiteur d'angle de pivotement qui limite au moins un angle d'ouverture maximal entre les deux bielles (13) et donc la distance maximale entre deux chariots (8) adjacents.

14. Bâti de toit selon l'une des revendications précédentes, **caractérisé en ce que** la distance de centre à centre entre deux chariots (8) adjacents est supérieure à la moitié de la hauteur de la structure de bâche (1), de préférence supérieure à 55% de la hauteur de la structure de bâche (1), de façon particulièrement préférée environ 60% de la hauteur de la structure de bâche (1).

15. Structure de bâche d'un véhicule de transport (4), en particulier d'un wagon de chemin de fer (4), comprenant une bâche (2) et au moins un bâti de toit (3) selon l'une des revendications précédentes.
